# EUROPEAN PATENT SPECIFICATION

(11) **EP 2 876 301 B1**
(45) Date of publication and mention of the grant of the patent: **02.11.2016**
(21) Application number: 13819831.2
(22) Date of filing: 24.06.2013
(51) Int. Cl.: F03D 1/06, F03D 7/04, G01M 3/04

(54) **WIND TURBINE WHEEL**
WINDTURBINENRAD
ROUE D'ÉOLIENNE

(30) Priority: 17.07.2012 JP 2012158985; 14.06.2013 JP 2013125857
(43) Date of publication of application: 27.05.2015
(73) Proprietor: IHI Inspection & Instrumentation Co., Ltd., Shinagawa-ku Tokyo 1400013 (JP)
(72) Inventor: OKUDA Atsushi, Tokyo 135-0061 (JP); KIZAWA Kei, Tokyo 135-0061 (JP); TAKIMOTO Hidetoshi, Tokyo 135-0061 (JP); MARU Hiroshi, Tokyo 135-0061 (JP); KIYOHARA Hidehiko, Tokyo 135-0061 (JP); SEKIYA Tatsuo, Tokyo 135-0061 (JP)
(74) Representative: Wallinger, Michael
(86) International application number: PCT/JP2013/067210
(87) International publication number: WO 2014/013844

(56) References cited:
- EP-A1- 2 604 991
- EP-A2- 2 339 175
- WO-A1-2009/066491
- DE-A1-102010 039 394
- JP-A- 2004 523 692
- JP-A- 2011 125 819
- JP-A- 2012 037 453

## Description

### Technical Field

The present invention relates to a wind turbine wheel that is used for wind power generation.

Priority is claimed on Japanese Patent Application No. 2012-158985, filed July 17, 2012, and on Japanese Patent Application No. 2013-125857, filed June 14, 2013 the contents of which are incorporated herein by reference.

### Background Art

In order to lessen the burden on the global environment, attention is being paid to electrical power generators that use clean energy instead of having to rely on fossil fuels. Wind power generators are known as one example of this type of electrical power generator.

In wind power generators, blades (i.e., rotating wings) capture wind and thereby cause a hub portion to rotate. Rotational energy from the hub portion is then converted into electrical energy (i.e., electricity is generated) by a power generator that is housed in a nacelle portion.

The blades are joined to a gear box via a main shaft. After the speed of the rotation force of the blades (i.e., of the main shaft) has been increased by the gear box, this rotation force is transmitted to the power generator where it is converted into electrical energy.

Lubricating oil is supplied to the gear box. An oil sensor is installed in order to detect any leakage of this lubricating oil. An optical oil detector that uses an optical fiber as its detecting element is employed for the oil sensor.

The European patent application EP 2 339 175 A2 discloses a computerized system for operating a wind turbine. The system includes a supervisory control and data acquisition system and a display for depicting a graphical output of information from the supervisory control and data acquisition system. The supervisory control and data acquisition system analyzes the information and transmits a signal to the display to visually depict the information in a dynamic manner.

The European patent application EP 2 604 991 A1 discloses a liquid detector having a plurality of optical fibers provided with bent portions, light emitting elements which are respectively provided in the optical fibers and input light according to electrical signals input from the outside to one end of the optical fibers, and light receiving elements which are respectively provided in the optical fibers and output electrical signals according to light emitted from the other end of the optical fibers to the outside. The bend radiuses of the bent portions of the optical fibers are set in accordance with the refractive indexes of associated liquids to be detected.

The German patent application DE 10 2010 039 394 A1 discloses a variable-pitch propeller. The pitch-adjusting device is arranged in the hub and formed in such a way that it allows only a numerically limited number of different blade pitches, for which purpose the pitch-adjusting device comprises an electrical drive device, for moving the blades from a first blade pitch to a second of the numerically limited number of blade pitches, and an electrically actuable locking device, for locking the blades in the numerically limited number of different blade pitches.

### Citation List

### Patent Documents

Patent Document 1: Japanese Patent No. 4008910

### Summary of Invention

### Technical Problem

In the wind turbine wheel of a wind power generator, generally, propeller-type rotating wings (blades) are used. Normally, three blades are used for these propeller-type rotating wings. The pitch angle of the three blades is able to be changed in accordance with the wind conditions so as to enable a predetermined rotation speed and output to be obtained.

A drive portion that controls the pitch angle of the blades is provided with a hydraulic apparatus such as, for example, a hydraulic cylinder. Accordingly, there is a possibility that a leakage may also occur inside the hub portion where the blades are held. If a leakage occurs inside the hub portion, there is a possibility that this oil may leak out to the outside and cause harm to the environment surrounding the wind power generation plant.

Because the wind turbine wheel is set up outdoors, in some cases rainwater and the like penetrate the interior of the hub portion and the nacelle portion. There are also cases of liquid such as antifreeze leaking inside the nacelle portion. If these liquids are present inside the hub portion or the nacelle portion, there is a possibility that these liquids may damage the wind turbine wheel.

It is an object of the present invention to provide a wind turbine wheel in which, by detecting liquid leakages, liquid incursions, and the like inside a hub portion and a nacelle portion, it is possible to prevent damage to the wind turbine wheel and prevent environmental pollution around the wind power generation plant.

### Solution to Problem

A first aspect of the wind turbine wheel according to the present invention is a wind turbine wheel that is used for wind power generation and that is provided with: a hub portion that has blades; and a nacelle portion that has a main shaft that is joined to the blades and a power generator that is connected to the main shaft, in which an optical liquid detector that has a detecting element that is formed by an optical fiber is disposed inside the hub portion, wherein a nose cap is removably mounted on the hub portion, the hub portion has a nose cap aperture portion to which the nose cap is attached, and the detecting element is disposed on a circumferential edge portion of the nose cap aperture portion.

A second aspect of the wind turbine wheel according to the present invention is that, in the above-described first aspect, the optical liquid detector detects the index of refraction of a liquid that has adhered to the detecting element, and specifies the type of this liquid.

A third aspect of the wind turbine wheel according to the present invention is that, in the above-described first or second aspects, the hub portion has blade aperture portions through which the blades extend outwards, the pitch angle of the blades is able to be changed by a hydraulic apparatus, and the detecting element is disposed on circumferential edge portions of the blade aperture portions.

A fourth aspect of the wind turbine wheel according to the present invention is that, in the above-described third or fourth aspects, liquid adhesive pats are provided around the circumferential edge portions of the blade aperture portions and the circumferential edge portion of the nose cap aperture portion so as to extend in the circumferential direction thereof, and the detecting element is provided so as to follow the shape of the liquid adhesive pads.

A fifth aspect of the wind turbine wheel according to the present invention is that, in any one of the above-described first through fourth aspects, a liquid adhesive sheet is wrapped around the detecting element.

### Advantageous Effects of Invention

According to the wind turbine wheel of the present invention, because liquid leakages, liquid incursions, and the like inside a hub portion and a nacelle portion can be detected, it is possible to prevent damage to the wind turbine wheel and prevent environmental pollution around the wind power generation plant.

### Brief Description of Drawings

FIG. 1 is a partial cross-sectional view showing in typical form a wind turbine wheel according to an embodiment of the present invention.
FIG. 2 is a partial cross-sectional view showing in typical form principal portions of the wind turbine wheel.
FIG. 3 is a perspective view showing the schematic structure of an optical liquid detector.
FIG. 4 is a side cross-sectional view showing the schematic structure of the optical liquid detector.
FIG. 5 is a view showing an optical fiber that is disposed around a blade aperture portion.
FIG. 6 is a view showing an optical fiber that is disposed around a nose cap aperture portion.
FIG. 7 is a perspective view showing another type of optical liquid detector.

### Description of Embodiments

A wind turbine wheel of the present invention will now be described in detail with reference made to the drawings. In each of the drawings, the scale of the respective components has been suitably altered in order to make each component a recognizable size.

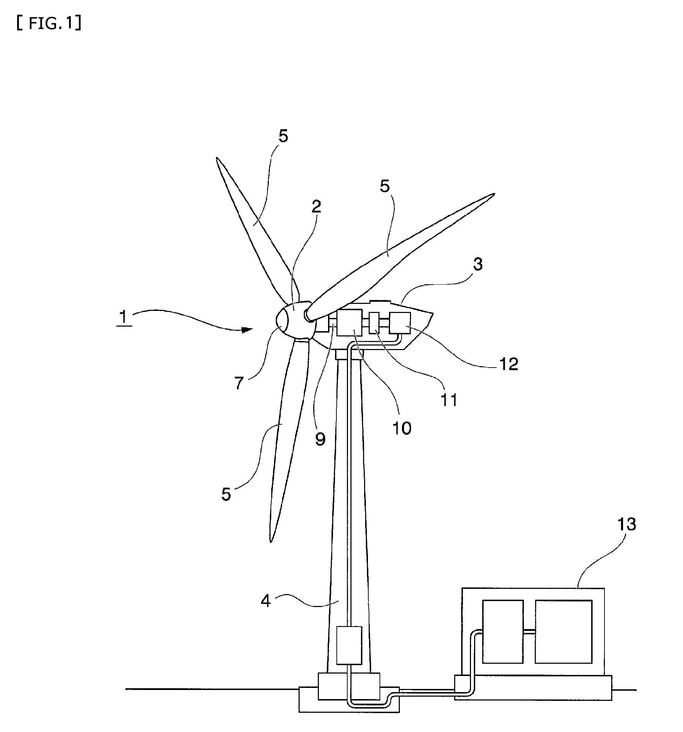

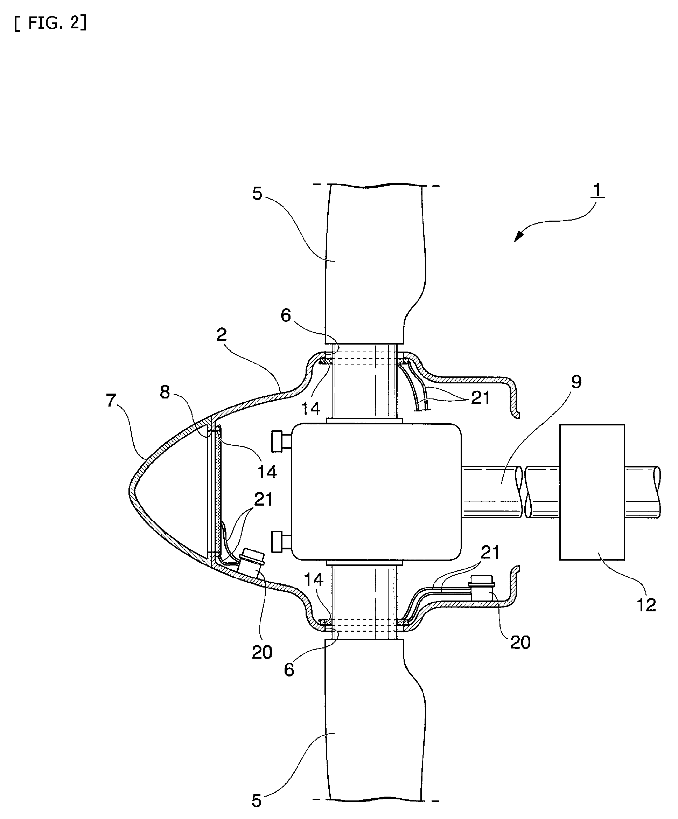

FIG. 1 is a partial cross-sectional view showing in typical form a wind turbine wheel 1 according to an embodiment of the present invention. FIG. 2 is a partial cross-sectional view showing in typical form principal portions of the wind turbine wheel 1.

The wind turbine wheel 1 is used in a wind power generator. The wind turbine wheel 1 is provided with a hub portion 2, a nacelle portion 3 that holds the hub portion 2 such that the hub portion 2 is able to rotate, and a tower 4 that supports the nacelle portion 3 on its apex portion.

The hub portion 2 is provided with three blades 5. As is shown in FIG. 2, three blade aperture portions 6 are formed in a side circumferential portion of the hub portion 2. The blade 5 extends outwards from each of the three blade aperture portions 6.

The pitch angle of the blades 5 can be changed in accordance with the wind conditions in order to enable a predetermined rotation speed and output to be obtained. The pitch angle of the blades 5 is adjusted by a hydraulic apparatus (not shown) that is located inside the hub portion 2. The hydraulic apparatus is a known hydraulic apparatus that employs hydraulic cylinders and the like.

A nose cap 7 is removably mounted on a distal end portion of the hub portion 2. The nose cap 7 is opened, for example, when maintenance or the like is performed inside the distal end portion of the hub portion 2.

A nose cap aperture portion 8 is formed in the distal end portion of the hub portion 2. Various types of equipment as well as operating staff can enter and exit the hub portion 2 through the nose cap aperture portion 8.

An optical fiber 21 belonging to an optical liquid detector 20 (described below) is disposed around circumferential edge portions of the nose cap aperture portion 8 and the blade aperture portions 6.

The nacelle portion 3 houses thereinside a main shaft 9 to which the blades 5 are joined. The nacelle portion 3 holds the hub portion 2 via the main shaft 9 such that the hub portion 2 is able to rotate.

A step-up gear 10 is connected to the main shaft 9. A braking mechanism 11 and a power generator 12 are connected via a drive transmission shaft (not shown) to the step-up gear 10.

The optical fiber 21 belonging to the optical liquid detector 20 (described below) is also disposed on the bottom portion of the nacelle portion 3.

In the wind turbine wheel 1, the hub portion 2 rotates when the blades 5 are driven by wind. The rotation of the hub portion 2 is transmitted via the main shaft 9 to the step-up gear 10 and is converted into high-speed rotation. This high-speed rotation force is transmitted via the power transmission shaft to the power generator 12. The power generator 12 generates power by converting this high-speed rotation force into electrical energy.

The tower 4 houses thereinside a control unit (not shown), a voltage transformer (not shown), and the like. The tower 4 is electrically connected via a cable (not shown) to a wind power generation plant 13 that is provided in the vicinity of the tower 4. The wind power generation plant 13 is provided with various types of monitoring systems, protective equipment, and control units.

The hydraulic apparatus that regulates the pitch angle of the blades 5 is provided inside the hub portion 2. Because of this, there is a possibility of an oil leak from the hydraulic apparatus occurring inside the hub portion 2. Moreover, there is also a possibility that rainwater and the like may penetrate the interior of the hub portion 2 through the nose cap aperture portion 8 and the blade aperture portions 6.

Because of this, the optical liquid detector 20 is installed inside the hub portion 2.

The step-up gear 10, the braking mechanism 11, the power generator 12, and the like are provided inside the nacelle portion 3. Because of this, there is a possibility of an oil leak from the step-up gear 10 and the like occurring inside the nacelle portion 3. There is additionally a possibility of a leakage of anti-freeze and the like occurring. Furthermore, there is also a possibility that rainwater and the like may penetrate the interior of the nacelle portion 32.

Because of this, the optical liquid detector 20 is installed inside the nacelle portion 3.

A plurality of (for example, four) optical liquid detectors 20 are provided inside the hub portion 2. A plurality of optical liquid detectors 20 are also provided inside the nacelle portion 3. These optical liquid detectors 20 all have the same structure.

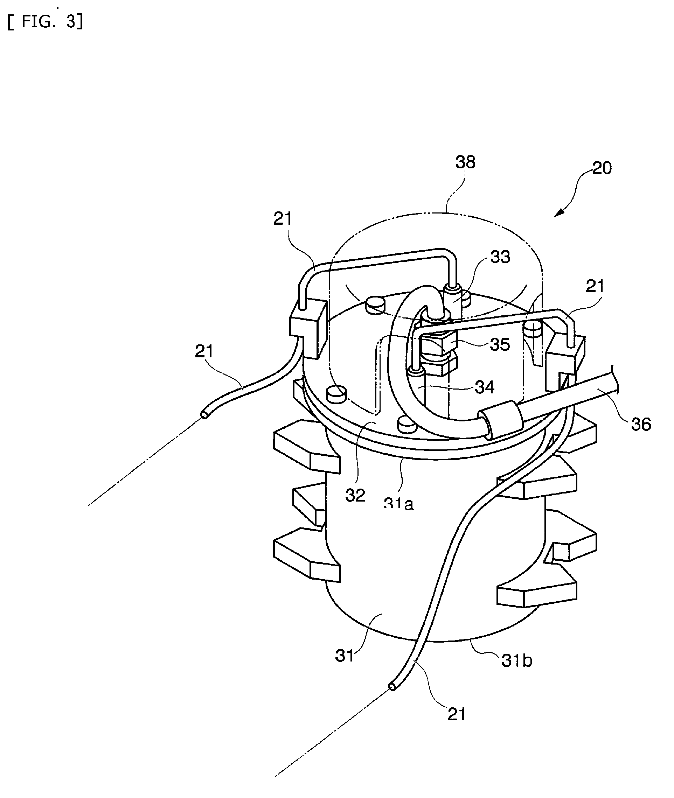

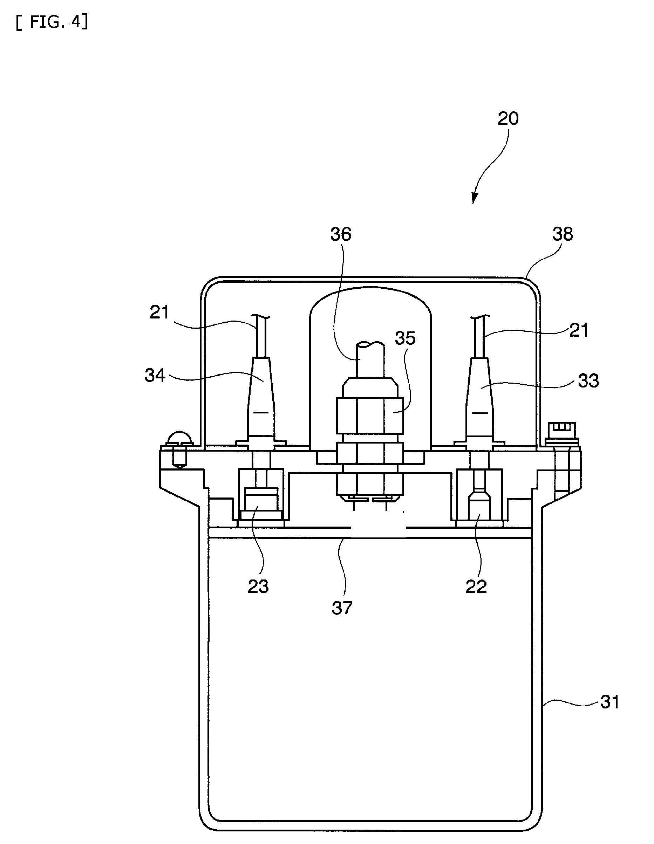

FIG. 3 is a perspective view showing the schematic structure of the optical liquid detector 20. FIG. 4 is a side cross-sectional view showing the schematic structure of the optical liquid detector 20.

The optical liquid detector 20 is a high-sensitivity, waterless explosion-proof sensor, and has a detecting element in the form of an optical fiber 21. The optical fiber 21 is fixed by adhesive tape, a holding band, holding fittings, or the like to a wall surface or bottom surface of the hub portion 2 and the nacelle portion 3.

The optical liquid detector 20 is fixed by bolts or the like to the wall surface or bottom surface of the hub portion 2 and the nacelle portion 3.

The optical liquid detector 20 has the optical fiber 21, a light-emitting element 22 that is provided at one end of the optical fiber 21, and a light-receiving element 23 that is provided at the other end of the optical fiber 21. The optical liquid detector 20 additionally has a casing 31, a lid body 32, fiber connectors 33 and 34, a cable connector 35, a signal cable 36, a circuit substrate 37, and a protective cover 38.

The casing 31 is a circular cylinder-shaped housing that has one closed end and is made from resin, and has a flange 31a on a top end thereof, and a bottom portion 31b at a bottom end thereof. The casing 31 houses thereinside the light-emitting element 22, the light-receiving element 23, and the circuit substrate 37.

The lid body 32 is a circular plate-shaped component that has substantially the same diameter as the flange 31 a of the casing 31.

The lid body 32 is fastened by bolts to the flange 31a with an O-ring (not shown) interposed therebetween.

The fiber connector 33 mechanically connects the one end of the optical fiber 21 to a top surface of the lid body 32. The fiber connector 33 introduces light that is emitted from the light-emitting element 22, which is housed inside the casing 31, to the one end of the optical fiber 21.

The fiber connector 34 mechanically connects the other end of the optical fiber 21 to the top surface of the lid body 32. The fiber connector 34 introduces light that is emitted from the other end of the optical fiber 21 to the receiving element 23 that is housed inside the casing 31.

The cable connector 35 mechanically connects one end of the signal cable 36 to the top surface of the lid body 32. The cable connector 35 also electrically connects the circuit substrate 37 that is housed in the casing 31 to the signal cable 36.

The one end of the signal cable 36 is connected via the cable connector 35 to the circuit substrate 37, while the other end thereof is connected through the nacelle portion 3 to the control unit that is provided in the tower 4, or to the control unit that is provided in the wind power generation plant 13. The signal cable 36 transmits electrical signals output from these control units to the circuit substrate 37. Moreover, the signal cable 36 transmits electrical signals output from the circuit substrate 37 to the control units.

The circuit substrate 37 is connected to the control unit via the signal cable 36. The light-emitting element 22 and the light-receiving element 23 are placed on the top surface of the circuit substrate 37. The circuit substrate 37 has a power supply circuit that supplies power to the light-emitting element 22, an amplifier circuit that amplifies the output from the light-receiving element 23, and the like.

The light-emitting element 22 generates light in accordance with electrical signals that are input from the control unit via the circuit substrate 37. The light-receiving element 23 outputs electrical signals that correspond to the light emitted from the other end of the optical fiber 21 to the control unit via the circuit substrate 37.

The protective cover 38 is placed on the top surface of the lid body 32 so as to cover the fiber connectors 33 and 34 and the cable connector 35, and protects each of these connectors.

The one end of the optical fiber 21 is connected to the fiber connector 33, while the other end of the optical fiber 21 is connected to the fiber connector 34.

The optical fiber 21 is provided with a plurality of (for example, seven) fiber wires each of which has a core that is made of quartz glass, and a cladding that is made of fluoride acrylate UV resin. The plurality of fiber wires surround a high tensile strength wire, and are housed inside a resin tube in which a slit has been cut.

The optical fiber 21 is placed in a predetermined position on the outside of the casing 31.

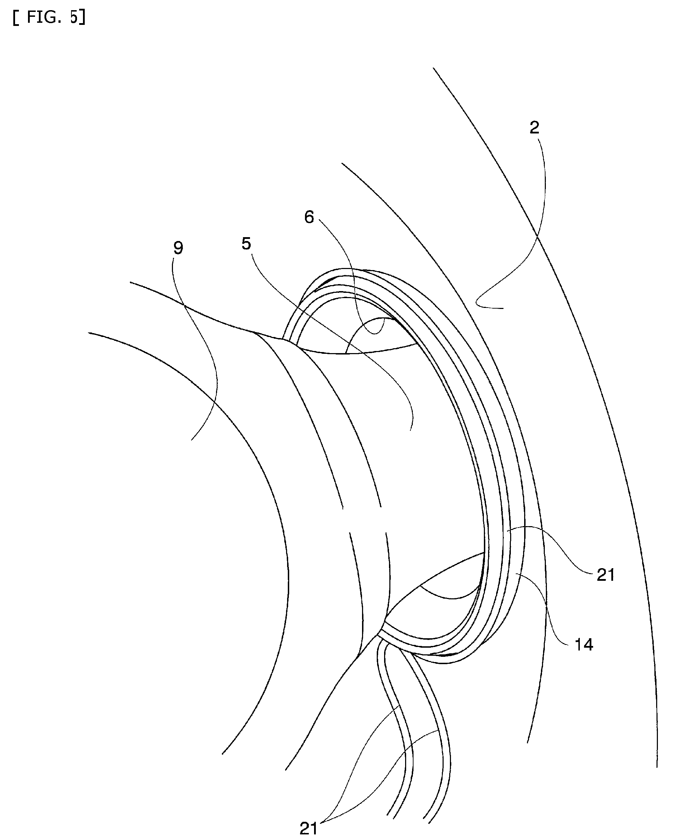

FIG. 5 is a view showing the optical fiber 21 that is disposed around the blade aperture portion 6.

Among the four optical liquid detectors 20 that are placed inside the hub portion 2, three optical fibers 21 are disposed around the blade aperture portions 6, respectively.

Liquid adhesive pads 14 are disposed so as to extend in the circumferential direction around circumferential edge portions of the blade aperture portions 6 of the hub portion 2, respectively.

The optical fiber 21 follows the shape of this liquid adhesive pad 14. The optical fiber 21 is disposed, for example, around either the top surface or the outer circumferential side of the liquid adhesive pad 14. The optical fiber 21 is fixed by adhesive tape, holding bands, holding fittings, or the like to the liquid adhesive pad 14.

The liquid adhesive pad is formed, for example, from polypropylene nonwoven cloth or the like.

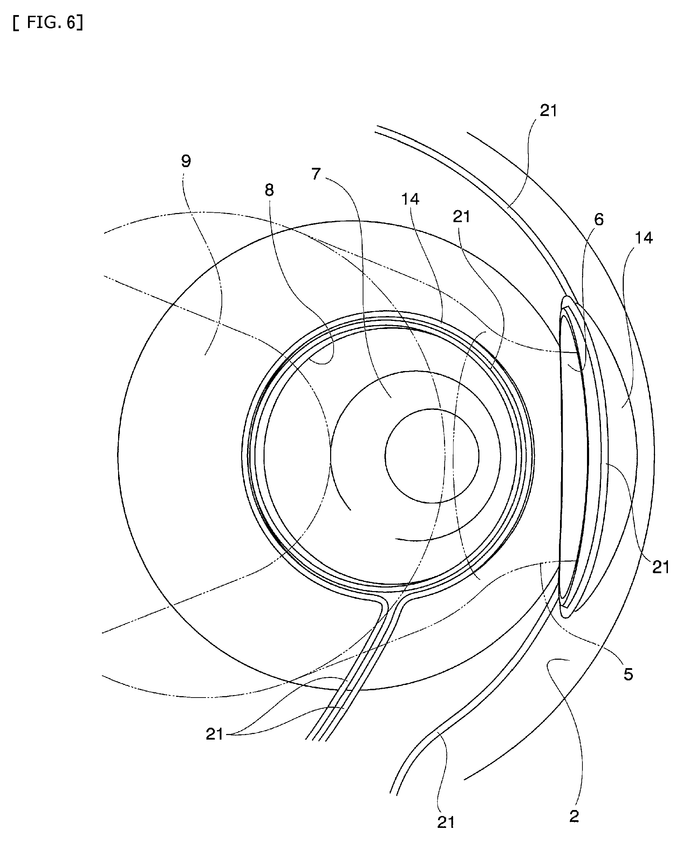

FIG. 6 is a view showing the optical fiber 21 that is disposed around the nose cap aperture portion 8.

Among the four optical liquid detectors 20 that are placed inside the hub portion 2, the remaining one optical fiber 21 is disposed around the nose cap aperture portion 8.

The liquid adhesive pad 14 is disposed so as to extend in the circumferential direction around a circumferential edge portion of the nose cap aperture portion 8 of the hub portion 2.

The optical fiber 21 follows the shape of this liquid adhesive pad 14. The optical fiber 21 is disposed, for example, around either the top surface or the outer circumferential side of the liquid adhesive pad 14. The optical fiber 21 is fixed by adhesive tape, holding bands, holding fittings, or the like to the liquid adhesive pad 14.

The liquid adhesive pad is formed, for example, from polypropylene nonwoven cloth or the like.

The optical fibers 21 of the plurality of optical liquid detectors 20 that are placed inside the nacelle portion 3 are disposed on the bottom portion or the like of the nacelle portion 3. The liquid adhesive pad 14 is also disposed on the bottom surface or the like of the nacelle portion 3. The optical fibers 21 are fixed by adhesive tape, holding bands, holding fittings, or the like to the liquid adhesive pad 14. The liquid adhesive pad is formed, for example, from polypropylene nonwoven cloth or the like.

In the optical liquid detectors 20, if a liquid such as oil, rainwater, or anti-freeze becomes adhered to the surface of the optical fiber 21, which is a detecting element, then the amount of leakage light increases, and the optical transmission loss of the optical fiber 21 also increases. By utilizing this characteristic, the optical liquid detector 20 is able to detect liquid leakages, rainwater incursions, and the like.

Inside the hub portion 2, if an oil leak occurs from the hydraulic apparatus that enables the pitch angle of the blades 5 to be changed, or if lubricating oil leaks out from the movable portions that change this pitch angle, then a portion of such oils flows to the blade aperture portions 6 and the nose cap aperture portion 8 due to the centrifugal force that accompanies the rotation of the hub portion 2, and the like. The oil that flows to the blade aperture portions 6 and the nose cap aperture portion 8 becomes adhered to the liquid adhesive pads 14 that are provided around the circumferential edge portions of the blade aperture portions 6 and the nose cap aperture portion 8.

Because the optical fibers 21 are disposed on the liquid adhesive pads 14, the oil that flows to the blade aperture portions 6 and the nose cap aperture portion 8 adheres directly to the optical fibers 21. Alternatively, after the oil has become adhered first to the liquid adhesive pads 14, a portion thereof becomes adhered subsequently to the optical fibers 21.

As a result of this, in the optical liquid detector 20, the amount of leakage light increases because of the oil adhering to the surface of the optical fiber 21. The optical liquid detector 20 detects the oil leak because of the increase in the optical transmission loss.

When the optical liquid detector 20 detects an oil leak in this manner, the optical liquid detector 20 outputs notification that an oil leak has occurred to the control unit via the signal cable. Accordingly, an operator who receives from this control unit the notification that an oil leak has occurred takes steps such as, for example, stopping the driving of the wind turbine wheel.

Alternatively, when the control unit receives the notification that an oil leak has occurred, the control unit stops the driving of the wind turbine wheel automatically in accordance with a preset program, and also outputs a notification that an oil leak has occurred to the monitoring system of the wind power generation plant 13.

The respective indexes of refraction of liquids such as oil and rainwater are mutually different. For example, the index of refraction of antifreeze varies depending on the density thereof. Because of this, the amount of leakage light from the optical fiber 21 changes in accordance with the type and density of the liquid that is adhered to the optical fiber 21.

Accordingly, based on the optical transmission loss of the optical fiber 21, the optical liquid detector 20 is able to detect the type and density of the liquid (i.e., is able to identify the liquid) that is adhered to the optical fiber 21.

The technology disclosed in Japanese Patent Application, First Publication No. 2012-37453 is used for the liquid identification by the optical liquid detector 20.

The optical liquid detector 20 outputs to the control unit information about the type and density of the liquid that is adhered to the optical fiber 21. The control unit outputs various types of alarm or the like, or automatically stops the driving of the wind turbine wheel in accordance with the type and density of the liquid that is adhered to the optical fiber 21.

If a leakage of a liquid such as oil or antifreeze, or an incursion of rainwater or the like occurs inside the nacelle portion 3, a portion of these liquids flows onto the bottom surface and the like of the nacelle portion 3. The liquid that flows onto the bottom surface and the like of the nacelle portion 3 becomes adhered to the liquid adhesive pad 14. Because the optical fiber 21 is disposed on the liquid adhesive pad 14, the optical liquid detector 20 is able to identify the liquid that is adhered to the optical fiber 21.

Accordingly, in the same way as when an oil leak or the like has occurred inside the hub portion 2, the control unit takes steps such as outputting various types of alarm or the like, or stopping the driving of the wind turbine wheel.

In the wind turbine wheel 1, because the optical liquid detector 20 which has detecting elements in the form of the optical fiber 21 is placed inside the hub portion 2 or the nacelle portion 3, it is possible to detect leakages of liquids such as oil or antifreeze, and to detect incursions of rainwater or the like.

Because the optical liquid detector 20 is able to identify a liquid that has adhered to the optical fiber 21, it is able to take suitable measures in accordance with the type and condition of the detected liquid.

Because the optical fibers 21 of the optical liquid detectors 20 are disposed around the circumferential edge portions of the blade aperture portions 6 and the nose cap aperture portion 8, respectively, it is possible to detect oil leaks inside the hub portion 2. Because it is possible to make such detections in advance before the oil leaks to the outside, it is possible to prevent the environment surrounding the wind power generation plant from becoming polluted.

The liquid adhesive pads 14 are provided on circumferential edge portions of the blade aperture portions 6 and the nose cap aperture portion 8, and the optical fibers 21 are provided so as to follow the shape of the liquid adhesive pads 14. Because of this, any oil that has leaked inside the hub portion 2 adheres to the liquid adhesive pads 14 and can be prevented from leaking to the outside. Moreover, it is possible to reliably detect any oil leak using the optical fibers 21 of the optical liquid detectors 20.

Note that the present invention is not limited to the above-described embodiment, and various modifications are possible insofar as they do not depart from the spirit or scope of the present invention.

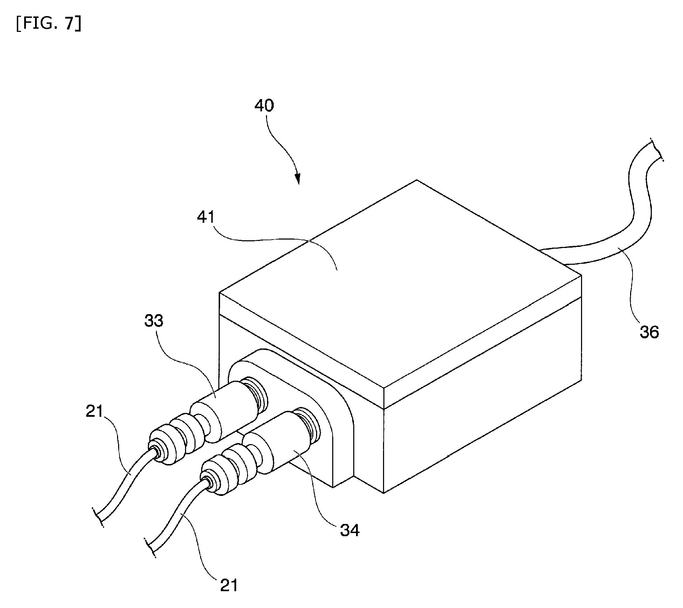

FIG. 7 is a perspective view showing another type of optical liquid detector (i.e., an optical liquid detector 40).

The optical liquid detector 40 is a sensor that is smaller and more lightweight than the optical liquid detector 20 which is a high-sensitivity, waterless explosion-proof sensor. The optical liquid detector 40 has an optical fiber 21 as a detecting element. The optical fibers 21 may be disposed on a bottom portion of a main body converter 41 of the optical liquid detector 40, or may be led out from the main body converter 41.

In the above-described embodiment, the optical liquid detector 40 may be used instead of the optical liquid detector 20.

Because the optical liquid detector 40 is small and lightweight, it can be placed in any desired position inside the hub portion 2 or nacelle portion 3. The optical liquid detector 40 is fixed by adhesive tape, holding bands, holding fittings, or the like to the wall surface or bottom surface of the hub portion 2 or nacelle portion 3. Moreover, by placing a magnet inside the optical liquid detector 40, it can be fixed to any steel or the like that is present in the hub portion 2 or nacelle portion 3.

In the above-described embodiment, the optical fibers 21 are used in a state in which they are simply housed inside a resin tube in which a slit has been cut, however, the present invention is not limited to this. It is also possible to use a liquid adhesive sheet that has been wrapped around the optical fiber 21. This liquid adhesive sheet is formed, for example, from polypropylene nonwoven cloth or the like.

By employing this structure, if an oil leak occurs inside the hub portion 2, and the leaked oil flows into the blade aperture portions 6 or the nose cap aperture portion 8, this oil can be absorbed by the oil absorption sheet and can be prevented from leaking out from the blade aperture portions 6 and the nose cap aperture portion 8. Moreover, it is possible to reliably detect oil using the optical fibers 21 of the optical liquid detectors 20.

In the above-described embodiment, four optical liquid detectors 20 are installed in the hub portion 2, and the respective optical fibers 21 thereof are positioned so as to correspond respectively to the three blade aperture portions 6 and the nose cap aperture portion 8, however, the present invention is not limited to this.

It is also possible to install only a single optical liquid detector 20 so that the optical fiber 21 thereof is laid over the circumferential edge portions of the three blade aperture portions 6 and the nose cap aperture portion 8.

It is also possible to install a single optical liquid detector 20 for the nose cap aperture portion 8, and to install a single optical liquid detector 20 for the three blade aperture portions 6 so that the optical fiber 21 thereof is laid over the three blade aperture portions 6.

Liquids that the optical liquid detectors 20 and 40 are able to identify are not limited to oil, antifreeze, and rainwater. Various types of liquid can be detected. For example, seawater, ethanol, silicone oil, gasoline, light oil, kerosene, heavy oil, and asphalt can also be detected. Various types of liquid mixtures can also be detected.

The optical fibers 21 may also be provided with fiber wires that are formed using an acrylic resin (PMMA).

### Reference Signs List

- 1:: Wind turbine wheel
- 2:: Hub portion
- 3:: Nacelle portion
- 5:: Blade
- 6:: Blade aperture portion
- 7:: Nose cap
- 8:: Nose cap aperture portion
- 9:: Main shaft
- 12:: Power generator
- 14:: Liquid adhesive pad
- 20:: Optical liquid detector
- 21:: Optical fiber (Detecting element)
- 40:: Optical liquid detector

## Claims

1. A wind turbine wheel (1) that is used for wind power generation, comprising:
a hub portion (2) that has blades (5); and
a nacelle portion (3) that has a main shaft (9) that is joined to the blades (5) and a power generator (12) that is connected to the main shaft (9), **characterized in that**
a nose cap (7) is removably mounted on the hub portion (2);
the hub portion (2) has a nose cap aperture portion (8) to which the nose cap (7) is attached;
an optical liquid detector (20) that has a detecting element (21) that is formed by an optical fiber is disposed inside the hub portion (2);
the detecting element (21) is disposed on a circumferential edge portion of the nose cap aperture portion (8).

2. The wind turbine wheel (1) according to claim 1, wherein the optical liquid detector (20) detects the index of refraction of a liquid that has adhered to the detecting element (21), and specifies the type of this liquid.

3. The wind turbine wheel (1) according to claims 1 or 2, wherein:
the hub portion (2) has blade aperture portions (6) through which the blades (5) extend outwards;
the pitch angle of the blades (5) is able to be changed by a hydraulic apparatus; and
the detecting element (21) is disposed on circumferential edge portions of the blade aperture portions (6).

4. The wind turbine wheel (1) according to claims 3, wherein:
liquid adhesive pats (14) are provided around the circumferential edge portions of the blade aperture portions (6) and the circumferential edge portion of the nose cap aperture portion extending in the circumferential direction thereof; and
the detecting element (21) is provided so as to follow the shape of the liquid adhesive pads.

5. The wind turbine wheel (1) according to any one of claims 1 through 3, wherein
a liquid adhesive sheet is wrapped around the detecting element (21).

## Patentansprüche

1. Windturbinenrad (1), welches für die Windenergieerzeugung verwendet wird und welches aufweist:
einen Nabenabschnitt (2), welcher Schaufeln (5) aufweist, und
einen Gondelabschnitt (3), welcher eine Hauptwelle (9), die mit den Schaufeln (5) verbunden ist, und einen Stromgenerator (12) aufweist, der mit der Hauptwelle verbunden ist, (9), **dadurch gekennzeichnet,**
**dass** eine Nasenkappe (7) abnehmbar auf dem Nabenabschnitt (2) angebracht ist,
**dass** der Nabenabschnitt (2) einen Nasenkappenöffnungsabschnitt (8) aufweist, an welchem die Nasenkappe (7) befestigt ist,
**dass** ein optischer Flüssigkeitsdetektor (20), der ein Erfassungselement (21) aufweist, das durch eine optische Faser gebildet wird, im Inneren des Nabenabschnitts (2) angeordnet ist, und
**dass** das Erfassungselement (21) an einem Umfangsrandabschnitt des Nasenkappennöffnungsabschnitts (8) angeordnet ist.

2. Windturbinenrad (1) nach Anspruch 1, wobei der optische Flüssigkeitsdetektor (20) den Brechungsindex einer Flüssigkeit erfasst, welche an dem Erfassungselement (21) anhaftet, und er die Art dieser Flüssigkeit bestimmt.

3. Windturbinenrad (1) nach den Ansprüchen 1 oder 2, wobei:
der Nabenabschnitt (2) Schaufelöffnungsabschnitte (6) aufweist, durch welche sich die Schaufeln (5) nach außen erstrecken,
der Neigungswinkel der Schaufeln (5) durch eine Hydraulikvorrichtung geändert werden kann, und
das Erfassungselement (21) an Umfangskantenabschnitten der Schaufelöffnungsabschnitte (6) angeordnet ist.

4. Windturbinenrad (1) nach Anspruch 3, wobei:
Flüssigklebstoffkissen (14) an den Umfangskantenabschnitten der Schaufelöffnungsabschnitte (6) und dem Umfangsrandabschnitt des Nasenkappenöffnungsabschnitts davon vorgesehen sind, welche sich in der Umfangsrichtung erstreckt, und
das Erfassungselement (21) vorgesehen ist, um der Form des Flüssigklebstoffkissens zu folgen.

5. Windturbinenrad (1) nach einem der Ansprüche 1 bis 3, wobei eine Flüssigklebstofffolie um das Erfassungselement (21) gewickelt ist.

## Revendications

1. Roue d'éolienne (1) qui est utilisée pour la génération d'énergie éolienne, comprenant :
une portion de moyeu (2) qui comporte des pales (5) ; et
une portion de nacelle (3) qui comporte un arbre principal (9) qui est assemblé aux pales (5) et un générateur d'énergie (12) qui est raccordé à l'arbre principal (9),
**caractérisée en ce que**
un capot de nez (7) est monté de façon amovible sur la portion de moyeu (2) ;
la portion de moyeu (2) comporte une portion d'ouverture de capot de nez (8) à laquelle est fixé le capot de nez (7) ;
un détecteur de liquide optique (20) qui comporte un élément de détection (21) qui est formé par une fibre optique est disposé à l'intérieur de la portion de moyeu (2) ;
l'élément de détection (21) est disposé sur une portion de bord circonférentielle de la portion d'ouverture de capot de nez (8).

2. Roue d'éolienne (1) selon la revendication 1, dans laquelle le détecteur de liquide optique (20) détecte l'indice de réfraction d'un liquide qui a adhéré à l'élément de détection (21), et spécifie le type de ce liquide.

3. Roue d'éolienne (1) selon les revendications 1 ou 2, dans laquelle :
la portion de moyeu (2) comporte des portions d'ouverture de pale (6) à travers lesquelles les pales (5) s'étendent vers l'extérieur ;
l'angle d'inclinaison des pales (5) est capable d'être changé par un appareil hydraulique ; et
l'élément de détection (21) est disposé sur des portions de bord circonférentielles des portions d'ouverture de pale (6).

4. Roue d'éolienne (1) selon la revendication 3, dans laquelle :
des patins d'adhésif liquide (14) sont prévus autour des portions de bord circonférentielles des portions d'ouverture de pale (6) et de la portion de bord circonférentielle de la portion d'ouverture de capot de nez s'étendant dans sa direction circonférentielle ; et
l'élément de détection (21) est prévu de façon à suivre la forme des patins d'adhésif liquide.

5. Roue d'éolienne (1) selon l'une quelconque des revendications 1 à 3, dans laquelle
une feuille d'adhésif liquide est enroulée autour de l'élément de détection (21).
